# EUROPÄISCHE PATENTSCHRIFT

(11) **EP 0 534 333 B1**
(45) Veröffentlichungstag und Bekanntmachung des Hinweises auf die Patenterteilung: **13.12.1995**
(21) Anmeldenummer: 92116059.4
(22) Anmeldetag: 19.09.1992
(51) Int. Cl.: C04B 35/48, F16C 33/04, C04B 35/80, F16J 15/34

(54) **Verwendung eines Funktionselements aus keramischem Werkstoff für Gleit- oder Dicht-Paarungen**
Use of ceramic engaging means for sliding or sealing systems
Utilisation d'un elément à fonction à base de matériau céramique pour systèmes composés de surface de glissement ou d'étanchéité

(30) Priorität: 21.09.1991 DE 4131547
(43) Veröffentlichungstag der Anmeldung: 31.03.1993
(73) Patentinhaber: KENNAMETAL HERTEL AG Werkzeuge + Hartstoffe, 90766 Fürth (DE)
(72) Erfinder: Schiefer, Josef, Dr. Ing., W-8550 Forchheim (DE)
(74) Vertreter: Tergau, Enno, Dipl.-Ing.

(56) Entgegenhaltungen:
- EP-A- 0 043 456
- EP-A- 0 137 134
- EP-A- 0 294 844
- DE-A- 3 903 866
- DATABASE WPIL Week 8843, Derwent Publications Ltd., London, GB; AN 88-303216
- DATABASE WPIL Week 8927, Derwent Publications Ltd., London, GB; AN 89-196390
- PATENT ABSTRACTS OF JAPAN vol. 90, no. 03 (M-349)9. Januar 1985

## Beschreibung

Die Erfindung betrifft die Verwendung eines aus einer gesinterten keramischen Matrix mit eingelagerten Hartstoffteilchen bestehenden keramischem Werkstoffs für die Herstellung von Funktionselementen für Gleit- oder Dicht-Paarungen mit kleinem Reibkoeffizienten.

Werkstoffe der angegebenen Art sind grundsätzlich bekannt. Beispielsweise ist in EP-PS 0 294 844 ein keramischer Körper beschrieben, der für die Verwendung u.a. als Schneidstahl gegenüber herkömmlichen keramischen Werkzeugen eine erhöhte Zähigkeit aufweisen soll. In der EP 0 137 134 A1 ist ein vergleichbarer Werkstoff offenbart, der für den Magnetkopf eines Festplatten- oder Floppy-Laufwerks eingesetzt ist, um diesen verschleißfest zu machen. Bei solchen Laufwerken liegt der Magnetkopf kurzzeitig bei den Start- und Stopp-Vorgängen auf dem magnetischen Substrat auf. Eine Gleit- oder Dichtpaarung im Sinne der vorliegenden Erfindung ist bei der genannten Anwendung nicht realisiert.

Funktionselemente für Gleit- oder Dicht-Paarungen werden beispielsweise für Dichtungen in Gas- und Wasserarmaturen, aber auch in Gleit- oder Rotations-Lagern und vielen anderen Maschinen und Apparaten verwendet. Man spricht in diesem Zusammenhang von "Gleichpaarung" und meint damit die Besonderheit, daß Funktionselemente gleicher Art in immer gleicher Weise oder in zyklischem Ablauf aufeinander einwirken. Typische Beispiele sind Dichtscheiben in Wasserarmaturen aber auch gleitend gelagerte Rotationswellen und ähnliches. Es ist bekannt, derartige Teile aus keramischen Werkstoffen herzustellen und es ist auch bekannt, daß durch Verwendung keramischer Werkstoffe für die Herstellung derartiger Teile die Lebensdauer gegenüber metallischen Gleit- oder Dicht-Paarungen erheblich gesteigert werden konnte.

Für die Beurteilung des Reibverhaltens solcher Teile wird in der Regel ein Reibbeiwert » bestimmt, der als Quotient der Reibkraft F_{R} und der Normalkraft F_{N} definiert ist. Der Reibbeiwert wird mit Hilfe eines Tribometers ermittelt, in welchem zwei Probekörper, die mit einer definierten Normalkraft gegeneinander gepreßt werden, relativ zueinander hin- und herbewegt werden. Die dabei wirkende Reibkraft wird gemessen und aus den erhaltenen Werten für die beiden Kräfte der Reibbeiwert berechnet. Je nach Anwendungszweck der Funktionsteile wird die Messung unter Verwendung trockener Proben ausgeführt. In anderen Fällen mißt man unter Bespülung der Proben mit Wasser oder Öl, wobei zur Erläuterung des erhaltenen Reibbeiwertes die Art des Schmiermittels, dessen Temperatur, Druck und Strömungsgeschwindigkeit angegeben wird.

Für die meisten Anwendungsfälle werden Funktionselemente mit möglichst geringem Reibbeiwert angestrebt. Anzustreben ist weiter, daß der Reibbeiwert von der Bewegungsrichtung unabhängig und über die Dauer vieler hundert Bewegungszyklen konstant ist. Für die Verwendung in Wasserarmaturen werden beispielsweise Reibbeiwerte in der Größenordnung von ≦ 0,2 angestrebt.

Aus der EP-PS 214 402 ist eine Gleitelementepaarung aus keramischem Werkstoff bekannt mit wenigstens einem auf der Basis von Siliziumnitrid hergestellten Gleitelement. Die Gleitelementepaarung ist dadurch gekennzeichnet, daß das Gleitelement aus einem Werkstoff auf Basis von Siliziumnitrid besteht, bei dem der Anteil der Siliziumnitridphase und/oder der Siliziumnitrid-Mischkristallphase bei mindestens 60 Gew% liegt und das Gegenelement aus einem Körper besteht, der aus einem Werkstoff auf Basis von Aluminiumoxid gebildet ist. Gleitelementepaarungen dieser Zusammenstellung sollen sowohl im trockenen wie auch im ölgeschmierten Zustand äußerst niedrige Gleitreibungskoeffizienten » in der Größenordnung von 0,05 bis 0,22 ergeben. Andererseits haben Gleitelemente dieser Art den Nachteil, daß sie nur in aufwendiger Weise hergestellt werden können.

Aus der EP-PS 310 985 ist eine Gleit- oder Dichtelementpaarung bekannt, die durch folgende Zusammensetzung gekennzeichnet ist:
44 bis 89,5 Gew% a-Siliziumkarbid
0,5 bis 6 Gew% Borkarbid
10 bis 50 Gew% Metallboride
wobei die Metallboride aus den Boriden der Metalle der Gruppe 4a,5a oder 6a des periodischen Systems der Elemente ausgewählt sind und eine zweite disperse Phase in dem Sinterformkörper bilden und wobei die im gleitenden oder dichtenden Eingriff stehende Funktionsoberfläche des Formkörpers einen erhöhten Metallboridgehalt aufweist.

Auch die Herstellung solcher Dichtelemente ist sehr aufwendig, so daß die Elemente zur Verwendung in Wasserarmaturen und ähnlichen Geräten zu teuer sind. Insbesondere bereitet die Einstellung der erhöhten Konzentration im Bereich der Funktionsoberflächen Schwierigkeiten.

Der Erfindung liegt die Aufgabe zugrunde, die bekannten Funktionselemente aus keramischem Werkstoff für Gleit- oder Dicht-Paarungen mit kleinem Reibungskoeffizienten bestehend aus einer gesinterten keramischen Matrix derart weiterzuentwickeln, daß auf einfache und leicht reproduzierbare Weise Funktionselemente mit niederem, richtungsunabhängigen und von der Dauer der Belastung unbeeinflußten Reibkoeffizienten entstehen.

Zur Lösung dieser Aufgabe wird von der bekannten Tatsache ausgegangen, daß bestimmte Oxide, insbesondere TiO₂, ideale Festschmierstoffe sind. Der Erfindung liegt nun die Beobachtung zugrunde, daß die Bildung dieser Metall-Sauerstoff-Verbindungen schon bei niedrigen und normalen Temperaturen erreicht werden kann, wenn die dazu erforderlichen Ausgangsstoffe in eine Matrix aus oxidischem Werkstoff eingebettet sind, der eine hohe Sauerstoffleitfähigkeit hat. Als Matrix dieser Art kommen insbesondere teil- und/oder vollstabilisierte Zirkondioxidsorten in Betracht. Dabei ist es vorteilhaft, zur Erhöhung der Festigkeit der Matrix noch Aluminiumoxid in verhältnismäßig untergeordneten Mengen zuzusetzen. Erfindungsgemäß wird daher vorgeschlagen, einen keramischen Werkstoff für die Herstellung von Funktionselementen für Gleit- oder Dichtpaarungen mit kleinem Reibkoeffizienten zu verwenden, welcher eine gesinterte keramische Matrix mit hoher Sauerstoffleitfähigkeit, bestehend aus Teil- und/oder vollstabilisiertem ZrO₂, in Mischung mit Al₂O₃, wobei in der Matrix Hartstoffteilchen aus Carbiden, Nitriden und/oder Boriden der Elemente der Gruppen IV und V des Periodensystems eingelagert sind.

Bei Versuchen hat sich ergeben, daß keramische Werkstoffe folgender Zusammensetzung besonders vorteilhafte Ergebnisse zeigen:
50 bis 95 Gew% teil- und/oder vollstabilisiertes ZrO₂ mit einer mittleren Korngröße des Ausgangsstoffes von < als 5 »m;
4 bis 40 Gew% Al₂O₃ mittlerer Korngröße des Ausgangsstoffes < 2 »m;
1 bis 40 Gew% Karbide, Nitride und/oder Borde der Elemente Ti, Si, Ta und/oder Nb, mittlere Korngröße des Ausgangsstoffes < 20 »m,
mit der Maßgabe, daß die Summe aller Ausgangsstoffe 100 % beträgt. Vorzugsweise werden als Hartstoffteilchen Carbide, Nitride und/oder Borde der Elemente Ti, Si, Ta und/oder Nb verwendet. Zur Stabilisierung des Zirkoniumoxids wird vorzugsweise Y₂O₃ eingesetzt. Zur Verunreinigungen und/oder Sinterhilfen wie SiO₂, MgO, TiO₂, Fe₂O₃ sowie metallischer Abrieb sollen eine Gesamtmenge von 12 Gew.% nicht übersteigen.

Die vorgeschlagene Zusammensetzung läßt auch die Bildung von Bornitrid zu, das ebenfalls als Festschmierstoff bekannt ist. Die Erfindung macht es aber möglich, die erwünschten Festschmierstoffe im Augenblick der Beanspruchung an der Funktionsfläche zu bilden. Würden die Festschmierstoffe dem Werkstoff von vornherein als Beimischung zugegeben, so würden die Festigkeiten der daraus hergestellten Bauteile nicht ausreichend sein. Es hat sich überraschenderweise gezeigt, daß bei Verwendung eines Funktionsteiles in Gleichpaarung ohne Schmierung bessere Werte erreicht werden können, wenn die verwendeten Werkstoffe voll stabilisiertes ZrO₂ enthalten. Dagegen können bei Gleichpaarungen mit Wasserschmierung niedrigere Reibbeiwerte erhalten werden, wenn das Zirkoniumoxid in teilstabilisierter Form liegt.

Mischungen von Ausgangsstoffen dieser Zusammensetzung lassen sich nach den üblichen keramischen Methoden herstellen und verarbeiten. Die erhaltenen Teile, also beispielsweise Gleitringdichtungen, Wälz- oder Gleitlager, Dichtungsscheiben, Lagerschalen, Wasserarmaturen, Stäbe u.dgl. zeigen bei guter Oberflächenfeinheit Reibbeiwerte von unter 0,2. Bemerkenswert ist, daß diese Beiwerte von der Reibrichtung unabhängig und über viele tausend Reibzyklen konstant sind. Bei der Reibbeanspruchung bildet sich in der äußersten Oberflächenschicht schon bei niedrigen Temperaturen durch Oxidation der enthaltenen Karbide, Nitride oder Borde, TiO₂, Si-O-Verbindungen, Ta₂O₃ oder Nb₂O₃. Die augenblickliche Bildung dieser Oxide ist dabei wesentlich auf den Sauerstoffnachschub durch das in der Matrix vorhandene ZrO₂ zurückzuführen.

### Ausführungsbeispiel 1

50 Gew% eines mit 8 Mol% Y₂O₃ vollstabilisierten Zirkondioxids mit einer mittleren Korngröße < 1 »m, 20 Gew% Al₂O₃, mittlere Korngröße < 1 »m und 30 Gew% TiC mittlere Korngröße 5 »m wurden einer Mischmahlung von 10 Stunden unterzogen. Die Mischmahlung wurde unter Wasser in einer Schwingmühle durchgeführt, die mit Kugeln aus gesintertem ZrO₂ bestückt war. Nach Beendigung der Mahlung wurde die Masse getrocknet und zu Probekörpern folgender Abmessungen verpreßt:

| | |
|---|---|
| Durchmesser | 25 mm |
| Dicke | 6 mm |

Die Probekörper wurden eine Stunde auf 1750° C in einer Argon-Atmosphäre erhitzt und dabei gesintert. Nach dem Abkühlen wurden die Proben geschliffen und poliert und im Trockenzustand als Gleichpaarung getestet. Der Reibbeiwert betrug konstant » = 0,15 über 10.000 Zyklen. Die Gleitgeschwindigkeit betrug 1 cm/sec.

### Ausführungsbeispiel 2

Nach demselben Verfahren wie in Beispiel 1 beschrieben wurden Probekörper aus folgendem Werkstoff hergestellt:
50 Gew% mit 3 Mol% Y₂O₃ teilstabilisiertes ZrO₂, mittlere Korngröße 2 »m,
20 Gew% Al₂O₃ mittlere Korngröße < 1 »m
30 Gew% TiC mittlere Korngröße 5 »m.

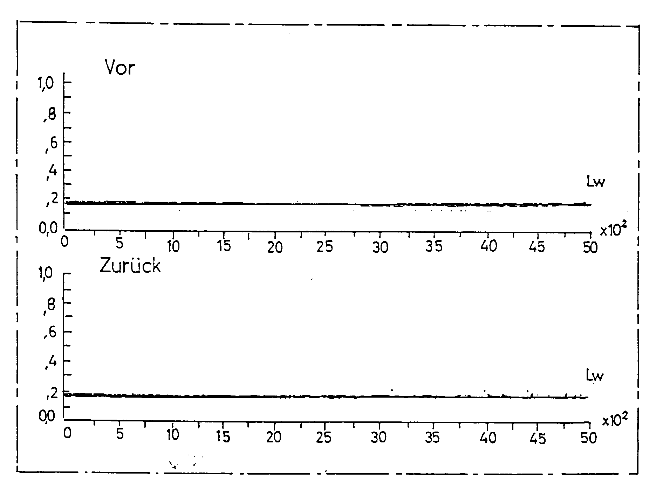

Der Reibbeiwert von Probekörpern aus dieser Stoffkombination ergab als Gleichpaarung im Trockenlauf » = 0,18. Die Abhängigkeit der Meßwerte von den einzelnen Beanspruchungszyklen geht aus der beiliegenden Abbildung hervor. Die Anzahl der Zyklen ist auf der X-Achse und die ermittelten Reibbeiwerte sind auf der Y-Achse aufgetragen. Das obere Diagramm zeigt dabei die ermittelten Werte bei Vorwärtsbewegung; das untere Diagramm bei Rückwärtsbewegung.

Es ist erkennbar, daß die Reibbeiwerte in beiden Fällen gleich groß sind und in nahezu idealer Weise über die gesamte Beanspruchungsdauer, also die Anzahl der Zyklen konstant bleiben.

Die Messung wurde mit Translationsbewegung ausgeführt. Die Normalkraft betrug 100,0 Newton. Der Hub betrug 4 mm, die Inspektionsgeschwindigkeit 1,5 mm/sec und die normale Testgeschwindigkeit 1,0 cm/sec.

Es wurde ohne Wasserschmierung, also trocken gearbeitet.

### Ausführungsbeispiel 3

Der nach Beispiel 2 erhaltene Werkstoff bzw. daraus hergestellte Probekörper wurden mit Probekörpern folgender Zusammensetzung als Gegenlaufmaterial getestet:
20 Gew% eines mit 3 Mol% MgO teilstabilisierten ZrO₂ mittlerer Korngröße 5 »m,
60 Gew% Al₂O₃ mittlere Korngröße < 1 »m
20 Gew% SiC mittlere Korngröße 5 »m.

Diese Ungleichpaarung ergab im Naßlauf einen konstanten Reibbeiwert von » = 0,15.

Es ist interessant zu bemerken, daß Werkstoffe, die zur Verwendung des Funktionsteiles in Gleichpaarung ohne Schmierung eingesetzt werden sollen, bessere Werte ergeben, wenn die Werkstoffe vollstabilisiertes ZrO₂ enthalten.

Sollen andererseits die Funktionsteile mit Wasserschmierung verwendet werden, beispielsweise in Sanitärarmaturen, so ergeben sich niedrigere Reibbeiwerte bei Verwendung von ZrO₂ in teilstabilisierter Form. Wie Ausführungsbeispiel 3 zeigt, können auch Ungleich-Paarungen zu vorteilhaften Ergebnissen führen.

## Patentansprüche

1. Verwendung eines keramischen Werkstoffs, mit
- einer gesinterten keramischen Matrix mit hoher Sauerstoffleitfähigkeit, bestehend aus teil- und/oder vollstabilisiertem ZrO₂, in Mischung mit Al₂O₃ und
- in der Matrix eingelagerten Hartstoffteilchen aus Karbiden, Nitriden und/oder Boriden der Elemente der Gruppen IV und V des Periodensystems
für die Herstellung von Funktionselementen für Gleit- oder Dichtpaarungen mit keinem Reibkoeffizienten.

2. Verwendung nach Anspruch 1, mit
- 50 bis 95 Gew% teil- und/oder vollstabilisiertem ZrO₂, mittlere Korngröße des Ausgangsstoffes < 5 »m;
- 4 bis 40 Gew% Al₂O₃, mittlere Korngröße des Ausgangsstoffes < 2 »m;
- 1 bis 40 Gew% Karbide, Nitride und/oder Boride der Elemente der Gruppe IV oder V des Periodensystems, mittlere Korngröße des Ausgangsstoffes < 20 »m,
mit der Maßgabe, daß die Summe aller Ausgangsstoffe 100% beträgt.

3. Verwendung nach Anspruch 2,
dadurch gekennzeichnet,
daß das Funktionselement Karbide, Nitride und/oder Borde der Elemente Ti, Si, Ta und/oder Nb enthält.

4. Verwendung nach Anspruch 1 oder 2,
dadurch gekennzeichnet,
daß das ZrO₂ mit Y₂O₃ stabilisiert ist.

5. Verwendung nach einem oder mehreren der Ansprüche 1 bis 4,
dadurch gekennzeichnet,
daß Verunreinigungen und/oder Sinterhilfen wie SiO₂, MgO, TiO₂, Fe₂O₃ sowie metallischer Abrieb einen Gesamtanteil von 12% nicht übersteigen.

6. Verwendung nach einem oder mehreren der Ansprüche 1 bis 5,
dadurch gekennzeichnet,
daß zur Verwendung des Funktionselementes in Gleichpaarung mit Wasserschmierung das ZrO₂ in teilstabilisierter Form vorliegt.

7. Verwendung nach einem oder mehreren der Ansprüche 1 bis 5,
dadurch gekennzeichnet,
daß zur Verwendung des Funktionselementes in Gleichpaarung ohne Schmierung das ZrO₂ in vollstabilisierter Form vorliegt.

8. Verwendung eines Funktionselements nach einem oder mehreren der Ansprüche 1 bis 7 für die Herstellung von Gleitringdichtungen.

9. Verwendung eines Funktionselements nach einem oder mehreren der Ansprüche 1 bis 7 für die Herstellung von Wälz- oder Gleitlagern.

10. Verwendung eines Funktionselementes nach Anspruch 6 für die Herstellung von Wasserarmaturen.

## Claims

1. Use of a ceramic material comprising
- a sintered ceramic matrix having a high oxygen conductivity and comprising partially and/or fully stabilized ZrO₂ in admixture with Al₂O₃ and
- hard material particles of carbides, nitrides and/or borides of the elements of Groups IV and V of the Periodic Table embedded in the matrix
for the production of functional elements for sliding or sealing pairings having a small coefficient of friction.

2. Use according to Claim 1, comprising
- from 50 to 95 % by weight of partially and/or fully stabilized ZrO₂, mean particle size of the starting material < 5 »m;
- from 4 to 40 % by weight of Al₂O₃, mean particle size of the starting material < 2 »m;
- from 1 to 40 % by weight of carbides, nitrides and/or borides of the elements of Group IV or V of the Periodic Table, mean particle size of the starting material < 20 »m,
with the proviso that the sum of all the starting materials is 100 %.

3. Use according to Claim 2, characterized in that the functional element contains carbides, nitrides and/or borides of the elements Ti, Si, Ta and/or Nb.

4. Use according to Claim 1 or 2, characterized in that the ZrO₂ is stabilized with Y₂O₃.

5. Use according to one or more of Claims 1 to 4, characterized in that impurities and/or sinter aids such as SiO₂, MgO, TiO₂, Fe₂O₃ and metallic abraded material do not exceed a total proportion of 12 %.

6. Use according to one or more of Claims 1 to 5, characterized in that for use of the functional element in like pairing with water lubrication the ZrO₂ is present in partially stabilized form.

7. Use according to one or more of Claims 1 to 5, characterized in that for use of the functional element in like pairing without lubrication the ZrO₂ is present in fully stabilized form.

8. Use of a functional element according to one or more of Claims 1 to 7 for the production of rotating mechanical seals.

9. Use of a functional element according to one or more of Claims 1 to 7 for the production of roller or sliding bearings.

10. Use of a functional element according to Claim 6 for the production of water valves.

## Revendications

1. Utilisation d'un matériau céramique présentant
- une matrice céramique frittée avec une conductibilité oxygène élevée constituée de ZrO₂ partiellement et/ou complètement stabilisé en mélange avec Al₂O₃ et
- des particules de matériaux de résistance mécanique élevée constituées de carbures, de nitrures et/ou de borures des éléments des groupes IV et V de la classification périodique des éléments, déposées dans la matrice
pour la préparation d'éléments fonctionnels pour des couplages de glissement ou d'étanchéité ayant un petit coefficient de friction.

2. Utilisation selon la revendication 1, avec
- de 50 à 95 % en poids de ZrO₂ partiellement et/ou totalement stabilisé avec une taille moyenne de grains du matériau de départ < 5 »m ;
- de 4 à 40 % en poids d'Al₂O₃ avec une taille moyenne de grains du matériau de départ < 2 »m ;
- de 1 à 40 % en poids de carbures, de nitrures et/ou de borures des éléments des groupes IV ou V de la classification périodique des éléments avec une taille moyenne de grains du matériau de départ < 20 »m,
à la condition que la somme de tous les produits de départ soit égale à 100 %.

3. Utilisation selon la revendication 2, caractérisée en ce que l'élément fonctionnel contient des carbures, des nitrures et/ou des borures des éléments Ti, Si, Ta et/ou Nb.

4. Utilisation selon la revendication 1 ou 2, caractérisée en ce que le ZrO₂ est stabilisé avec Y₂O₃.

5. Utilisation selon l'une quelconque ou plusieurs des revendications 1 à 4, caractérisée en ce que des impuretés et/ou des auxiliaires de frittage comme SiO₂, MgO, TiO₂, Fe₂O₃ ainsi que l'usure métallique par le frottement ne représentent pas une part totale dépassant 12 %.

6. Utilisation selon l'une quelconque ou plusieurs des revendications 1 à 5, caractérisée en ce que le ZrO₂ est présent dans une forme partiellement stabilisée pour l'utilisation de l'élément fonctionnel dans un couplage identique avec une lubrification à l'eau.

7. Utilisation selon l'une quelconque ou plusieurs des revendications 1 à 5, caractérisée en ce que le ZrO₂ est présent dans une forme complètement stabilisée pour l'utilisation de l'élément fonctionnel dans un couplage identique sans lubrification.

8. Utilisation d'un élément fonctionnel selon l'une quelconque ou plusieurs des revendications 1 à 7 pour la préparation de garnitures étanches à anneaux glissants.

9. Utilisation d'un élément fonctionnel selon l'une quelconque ou plusieurs des revendications 1 à 7 pour la préparation de paliers à glissement ou à roulement.

10. Utilisation d'un élément fonctionnel selon la revendication 6 pour la préparation de robinetteries à eau.
